(19) **Europäisches Patentamt European Patent Office Office européen des brevets**

(11) **EP 4 067 455 B1**

(12) **EUROPEAN PATENT SPECIFICATION**

(45) Date of publication and mention of the grant of the patent:
**20.09.2023 Bulletin 2023/38**

(21) Application number: **20894893.5**

(22) Date of filing: **24.11.2020**

(51) International Patent Classification (IPC):
**C09K 5/06** *(2006.01)*   **F28D 20/02** *(2006.01)*

(52) Cooperative Patent Classification (CPC):
**F28D 20/02; C09K 5/063;** Y02E 60/14

(86) International application number:
**PCT/JP2020/043642**

(87) International publication number:
**WO 2021/106862 (03.06.2021 Gazette 2021/22)**

(54) **HEAT STORAGE MATERIAL COMPOSITION, AND HEAT STORAGE SYSTEM FOR HEATING AND COOLING BUILDING**

WÄRMESPEICHERSTOFFZUSAMMENSETZUNG UND WÄRMESPEICHERSYSTEM ZUM HEIZEN UND KÜHLEN VON GEBÄUDEN

COMPOSITION DE MATÉRIAU DE STOCKAGE DE CHALEUR ET SYSTÈME DE STOCKAGE DE CHALEUR POUR LE CHAUFFAGE ET LE REFROIDISSEMENT D'UN BÂTIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2019 JP 2019212356**

(43) Date of publication of application:
**05.10.2022 Bulletin 2022/40**

(73) Proprietor: **Yazaki Corporation Tokyo (JP)**

(72) Inventors:
• **MOMOI Takashi**
  **Susono-shi, Shizuoka 410-1194 (JP)**
• **MIYASHITA Shigekazu**
  **Susono-shi, Shizuoka 410-1194 (JP)**
• **LEE Sangbae**
  **Susono-shi, Shizuoka 410-1194 (JP)**

(74) Representative: **Grünecker Patent- und Rechtsanwälte PartG mbB Leopoldstraße 4 80802 München (DE)**

(56) References cited:
**JP-A- S6 185 486    JP-A- S57 170 977**
**JP-A- S59 109 578    JP-A- 2000 063 810**
**JP-A- 2020 196 817**

**Description**

TECHNICAL FIELD

The present invention relates to a heat storage material composition, and a heat storage system for heating and cooling a building.

BACKGROUND ART

Latent heat storage material compositions that utilize the latent heat generated or absorbed during the phase change from liquid to solid or from solid to liquid have been known. Latent heat storage material compositions are used, for example, in heat storage systems for heating and cooling a building. Hereinafter, the latent heat storage material composition is simply referred to as a "heat storage material composition".

Heat storage material compositions are to have a sufficient heat storage effect stably in an intended temperature range. Thus, for example, when a heat storage material composition is used in a heat storage system for heating and cooling a building, the following is awaited for the heat storage material composition. That is, in the heat storage material composition, the phase change of the heat storage material composition is to occur in a temperature region that matches or approximates a temperature used for heating and cooling a building, and heat storage amount is to be large in a narrow temperature range in this temperature region.

Here, as an indicator indicating a "temperature region that matches or approximates a temperature used in heating and cooling a building", a "5 °C range lower-limit temperature $T_{5L}$" indicating the lower-limit temperature of this temperature region is usable, for example. As an indicator indicating that "a heat storage amount is large in a narrow temperature range", a "5 °C range latent heat of melting $H_5$" is usable, for example.

In this description, the "5 °C range latent heat of melting $H_5$" means a "total amount of latent heat of melting in a temperature range of 5 °C" and is defined as the maximum value of a total amount $Q_5$ of latent heat of melting in a temperature range of T to T + 5 °C when T is changed for the total amount $Q_5$. The "5 °C range lower-limit temperature $T_{5L}$" is defined as the lower-limit temperature of the above-described temperature range of 5 °C, and a "5 °C range upper-limit temperature $T_{5H}$" is defined as the upper-limit temperature of the above-described temperature range of 5 °C.

A total latent heat of melting $H_T$ means a sum of latent heat derived during the phase change of all the heat storage material composition from solid to liquid. Specifically, the total latent heat of melting $H_T$ is calculated from a peak area obtained by integrating a heat flow measured by a differential scanning calorimeter (DSC) over time. The 5 °C range latent heat of melting $H_5$ takes a value less than or equal to the total latent heat of melting $H_T$.

It is preferable that the 5 °C range lower-limit temperature $T_{5L}$ of a heat storage material composition used for a heat storage system of heating and cooling a building is within a range of 15 °C to 20 °C because heat exchange efficiency with outside air is improved. It is preferable that the 5 °C range latent heat of melting $H_5$ is 140 J/g or more because latent heat of the heat storage material composition is utilized to the maximum.

In contrast, as a conventional heat storage material composition, Patent Literature 1 discloses a heat storage material made from $CaCl_2 \cdot 6H_2O$ with one or more potassium salts of KBr and $KNO_3$.

CITATION LIST

PATENT LITERATURE

Patent Literature 1: Japanese Unexamined Patent Application Publication No. S59-109578

SUMMARY OF INVENTION

TECHNICAL PROBLEM

However, in the heat storage material composition of Patent Literature 1, the 5 °C range latent heat of melting $H_5$ is small. Also, it is preferable that the heat storage material composition does not contain a melting point modifier, such as water, because phase separation is prevented.

The present invention has been made in consideration of such issues as described above. An object of the present invention is to provide a heat storage material composition that has a 5 °C range lower-limit temperature $T_{5L}$ within a range of 15 °C to 20 °C and a 5 °C range latent heat of melting $H_5$ of 140 J/g or more, and a heat storage system for heating and cooling a building with the heat storage material composition.

SOLUTION TO PROBLEM

A heat storage material composition according to an aspect of the present invention includes a main agent composed of calcium chloride hexahydrate, ammonium bromide, and potassium chloride, wherein when a content of calcium chloride hexahydrate is defined as X mass%, a content of ammonium bromide is defined as Y mass%, and a content of potassium chloride is defined as Z mass% in 100 mass% of the main agent, X, Y, and Z satisfy following equations (1) to (4):
[Equation 1]

$$X+Y+Z=100 \qquad (1)$$

[Equation 2]

$$X+0.714Y-90.857 \geq 0 \qquad (2)$$

[Equation 3]

$$X+Y-99.000 \leq 0 \qquad (3)$$

[Equation 4]

$$4 \leq Y \leq 10 \qquad (4)$$

A heat storage system for heating and cooling a building according to an aspect of the present invention includes a heat storage material module using the above-described heat storage material composition.

BRIEF DESCRIPTION OF DRAWINGS

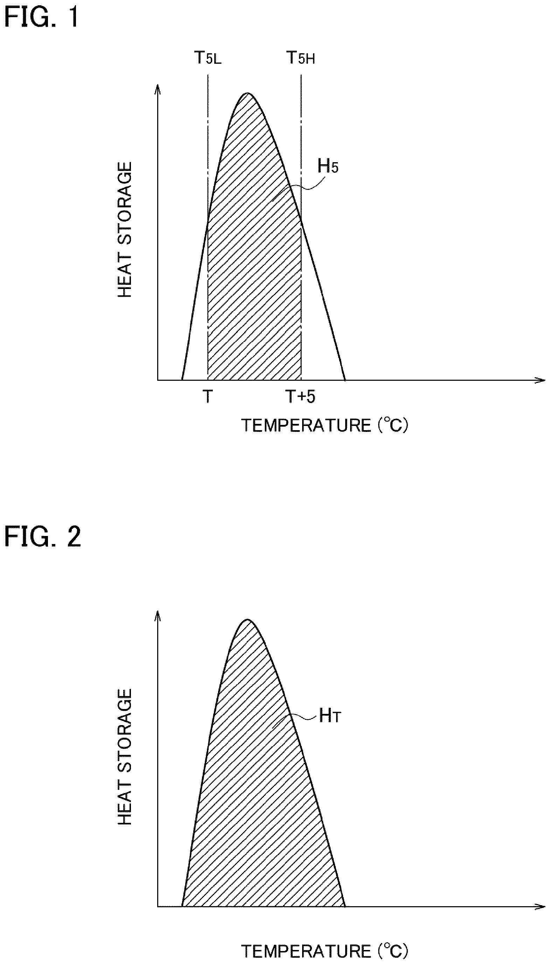

Fig. 1 is a diagram illustrating a 5 °C range latent heat of melting $H_5$ of a latent heat storage material composition.
Fig. 2 is a diagram illustrating a total latent heat of melting $H_T$ of the latent heat storage material composition.
Fig. 3 is a ternary composition diagram illustrating a suitable range of contents of calcium chloride hexahydrate, ammonium bromide, and potassium chloride in a main agent.
Fig. 4 is an enlarged view of a part of Fig. 3.

DESCRIPTION OF EMBODIMENTS

A detailed description is given below of a heat storage material composition and a heat storage system for heating and cooling a building according to an embodiment of the present invention.

[Heat storage material composition]

A heat storage material composition according to the present invention includes a main agent. The main agent is composed of calcium chloride hexahydrate, ammonium bromide, and potassium chloride.

<Calcium chloride hexahydrate>

As calcium chloride hexahydrate ($CaCl_2.6H_2O$), a known compound is usable.
The heat storage material composition according to the present embodiment usually includes 85.0 to 93.0 mass% of calcium chloride hexahydrate per 100 mass% of the main agent. Here, 100 mass% of the main agent means that the total amount of calcium chloride hexahydrate, ammonium bromide, and potassium chloride is 100 mass%. When the content of calcium chloride hexahydrate is within the above-described range, the heat storage material composition easily has a 5 °C range lower-limit temperature $T_{5L}$ within a range of 15 °C to 20 °C and a 5 °C range latent heat of

melting $H_5$ of 140 J/g or more.

Here, the 5 °C range latent heat of melting $H_5$ means the "total amount of latent heat of melting in a temperature range of 5 °C" as described above and is defined as the maximum value of the total amount Qs of latent heat of melting in a temperature range of T to T + 5 °C when T is changed for the total amount Qs. Specifically, the 5 °C range latent heat of melting $H_5$ is derived as the maximum value of time integration of a heat flow measured by the differential scanning calorimeter (DSC) from a certain instant (time $t_1$, temperature $T_1$) to an instant (time $t_2$, temperature $T_1 + 5$) when the temperature reaches $T_1 + 5$ °C.

The total latent heat of melting $H_T$ means the sum of latent heat derived during the phase change of all the heat storage material composition from solid to liquid. Specifically, the total latent heat of melting $H_T$ is calculated from a peak area obtained by integrating a heat flow measured by the differential scanning calorimeter (DSC) over time. The 5 °C range latent heat of melting $H_5$ takes a value less than or equal to the total latent heat of melting $H_T$.

Preferably, the heat storage material composition according to the present embodiment includes 85.0 to 91.0 mass% of calcium chloride hexahydrate per 100 mass% of the main agent. In this case, the heat storage material composition more easily has the 5 °C range lower-limit temperature $T_{5L}$ within the range of 15 °C to 20 °C and the 5 °C range latent heat of melting $H_5$ of 140 J/g or more.

<Ammonium bromide>

A known ammonium bromide ($NH_4Br$) is usable.

The heat storage material composition according to the present embodiment usually includes 4.0 to 10.0 mass% of ammonium bromide per 100 mass% of the main agent. When the content of ammonium bromide is within the above-described range, the heat storage material composition easily has the 5 °C range lower-limit temperature $T_{5L}$ within the range of 15 °C to 20 °C and the 5 °C range latent heat of melting $H_5$ of 140 J/g or more.

Preferably, the heat storage material composition according to the present embodiment includes 5.0 to 10.0 mass% of ammonium bromide per 100 mass% of the main agent. In this case, the heat storage material composition more easily has the 5 °C range lower-limit temperature $T_{5L}$ within the range of 15 °C to 20 °C and the 5 °C range latent heat of melting $H_5$ of 140 J/g or more.

<Potassium chloride>

A known potassium chloride (KCl) is usable.

The heat storage material composition according to the present embodiment usually includes 1.0 to 8.0 mass% of potassium chloride per 100 mass% of the main agent. When the content of potassium chloride is within the above-described range, the heat storage material composition easily has the 5 °C range lower-limit temperature $T_{5L}$ within the range of 15 °C to 20 °C and the 5 °C range latent heat of melting $H_5$ of 140 J/g or more.

Preferably, the heat storage material composition according to the present embodiment includes 3.0 to 5.0 mass% of potassium chloride per 100 mass% of the main agent. In this case, the heat storage material composition more easily has the 5 °C range lower-limit temperature $T_{5L}$ within the range of 15 °C to 20 °C and the 5 °C range latent heat of melting $H_5$ of 140 J/g or more.

Preferably, the heat storage material composition includes 85.0 to 93.0 mass% of calcium chloride hexahydrate, 4.0 to 10.0 mass% of ammonium bromide, and 1.0 to 8.0 mass% of potassium chloride per 100 mass% of the main agent. When the content of each substance, such as calcium chloride hexahydrate, is within the above-described range, the heat storage material composition easily has the 5 °C range lower-limit temperature $T_{5L}$ within the range of 15 °C to 20 °C and the 5 °C range latent heat of melting $H_5$ of 140 J/g or more.

More preferably, the heat storage material composition includes 85.0 to 91.0 mass% of calcium chloride hexahydrate, 5.0 to 10.0 mass% of ammonium bromide, and 3.0 to 5.0 mass% of potassium chloride per 100 mass% of the main agent. When the content of each substance, such as calcium chloride hexahydrate, is within the above-described range, the heat storage material composition more easily has the 5 °C range lower-limit temperature $T_{5L}$ within the range of 15 °C to 20 °C and the 5 °C range latent heat of melting $H_5$ of 140 J/g or more.

<Composition of heat storage material composition>

In the heat storage material composition, it is preferable that X, Y, and Z in the main agent satisfy the following equations (1) to (4). Here, X, Y, and Z define the content of calcium chloride hexahydrate as X mass%, the content of ammonium bromide as Y mass%, and the content of potassium chloride as Z mass% in the main agent.
[Equation 5]

$$X+Y+Z=100 \qquad (1)$$

[Equation 6]

$$X+0.714Y-90.857 \geq 0 \qquad (2)$$

[Equation 7]

$$X+Y-99.000 \leq 0 \qquad (3)$$

[Equation 8]

$$4 \leq Y \leq 10 \qquad (4)$$

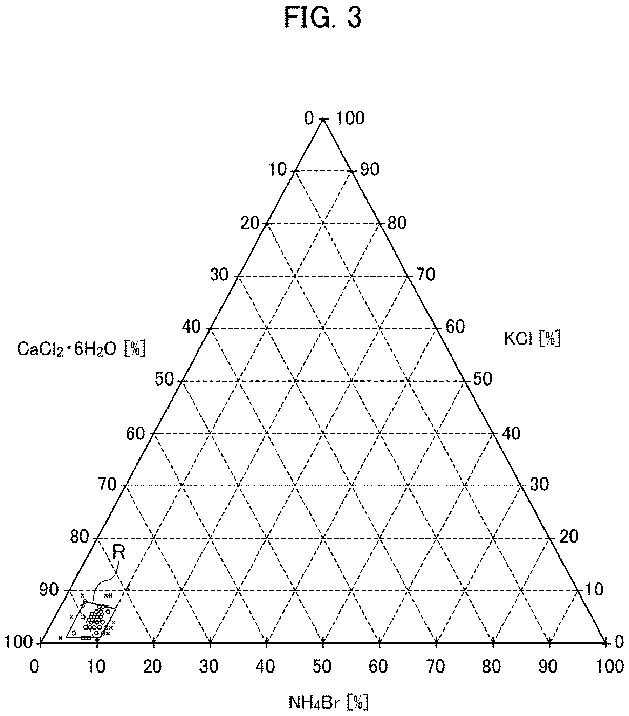

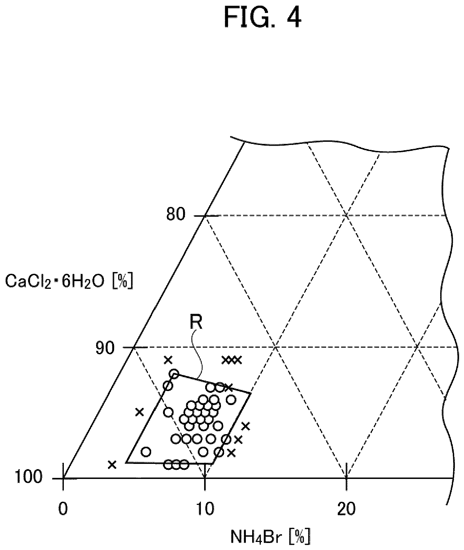

Fig. 3 is a ternary composition diagram illustrating a suitable range of contents of calcium chloride hexahydrate, ammonium bromide, and potassium chloride in the main agent. Fig. 4 is an enlarged view of a part of Fig. 3. A quadrilateral R in Figs. 3, 4 and its interior are a range satisfying the above-described equations (1) to (4).

In the heat storage material composition according to the present embodiment, when the above-described X, Y, and Z satisfy the following equations (1) to (4), the heat storage material composition easily has the 5 °C range lower-limit temperature $T_{5L}$ within the range of 15 °C to 20 °C and the 5 °C range latent heat of melting $H_5$ of 140 J/g or more.

(Melting point depressant)

Preferably, the heat storage material composition according to the present embodiment further includes a specific melting point depressant. It lowers the melting point of the main agent. Examples of the melting point depressant used include at least one selected from the group consisting of sodium chloride, sodium nitrate, sodium bromide, ammonium chloride, ammonium sulfate, ammonium nitrate, ammonium phosphate, and urea.

(Supercooling inhibitor)

Preferably, the heat storage material composition according to the present embodiment further includes a specific supercooling inhibitor. It inhibits supercooling of the main agent. Examples of the supercooling inhibitor used include at least one selected from the group consisting of strontium hydroxide octahydrate, strontium hydroxide, strontium chloride, strontium chloride hexahydrate, octadecane, decanoic acid, viscose rayon, bromooctadecane, sodium monododecyl phosphate, alumina, propanol, 2-propanol, 1-propanol, dodecyl phosphate Na, borax $Na_2B_4O_5(OH)_4 \cdot 8H_2O$, calcium hydroxide, barium hydroxide, aluminum hydroxide, graphite, aluminum, titanium dioxide, hectorite, smectite clay, bentonite, laponite, propylene glycol, ethylene glycol, glycerin, ethylenediamine tetraacetic acid, sodium alkylsulfate, sodium alkylphosphate, potassium alkylsulfate, and potassium alkylphosphate.

(Phase separation inhibitor)

Preferably, the heat storage material composition according to the present embodiment further includes a specific phase separation inhibitor. It inhibits phase separation of the main agent. Examples of the phase separation inhibitor used include at least one selected from the group consisting of sodium silicate, water glass, polyacrylic acid, polyacrylic ester, copolymer of acrylamide, acrylic acid, and DMAEA-MeCl, polyacrylic ester based resin, polyacrylamide, polyaluminum chloride, aluminum sulfate, ferric polysulfate, polycarboxylate polyether polymer, acrylic acid-maleic acid copolymer sodium salt, acrylic acid-sulfonic acid based monomer copolymer sodium salt, acrylamide-dimethylaminoethyl methacrylate dimethyl sulfate copolymer, acrylamide-sodium acrylate copolymer, polyethylene glycol, polypropylene glycol, superabsorbent polymer (SAP), carboxymethyl cellulose (CMC), a derivative of CMC, carrageenan, a derivative of carrageenan, xanthan gum, a derivative of xanthan gum, pectin, a derivative of pectin, starch, a derivative of starch, konjac, agar, layered silicate, and a compound substance of some of these substances.

(Property)

The heat storage material composition according to the present embodiment has the 5 °C range lower-limit temperature $T_{5L}$ within the range of 15 °C to 20 °C and exhibits heat storage performance in a temperature range suitable as a latent heat storage material composition for a heat storage system for heating and cooling a building. Therefore, the heat storage material composition according to the present embodiment is suitable as a latent heat storage material composition for a heat storage system for heating and cooling a building.

The heat storage material composition according to the present embodiment has the 5 °C range lower-limit temperature $T_{5L}$ of 15 °C or more and 20 °C or less, preferably 15 °C or more and 19 °C or less. As the 5 °C range lower-limit temperature $T_{5L}$ is within the above-described numerical range, the heat storage material composition according to the present embodiment exhibits heat storage performance in a temperature range suitable as a latent heat storage material composition for a heat storage system for heating and cooling a building. Therefore, the heat storage material composition according to the present embodiment is suitable as a latent heat storage material composition for a heat storage system for heating and cooling a building.

The heat storage material composition according to the present embodiment has the 5 °C range latent heat of melting $H_5$ of 140 J/g or more, preferably 170 J/g or more. As the 5 °C range latent heat of melting $H_5$ is within the above-described numerical range, the heat storage material composition according to the present embodiment is suitable as a latent heat storage material composition for a heat storage system for heating and cooling a building.

In the heat storage material composition according to the present embodiment, the total latent heat of melting $H_T$ is 140 J/g or more, preferably 170 J/g or more. As the total latent heat of melting $H_T$ is within the above-described numerical range, the heat storage material composition according to the present embodiment is suitable as a latent heat storage material composition for a heat storage system for heating and cooling a building.

Here, the total latent heat of melting $H_T$ means the sum of latent heat derived during the phase change of all the heat storage material composition from solid to liquid, as described above. Specifically, the total latent heat of melting $H_T$ is calculated from a peak area obtained by integrating a heat flow measured by the differential scanning calorimeter (DSC) over time. The 5 °C range latent heat of melting $H_5$ takes a value less than or equal to the total latent heat of melting $H_T$.

(Effect)

The heat storage material composition according to the present embodiment provides the heat storage material composition having the 5 °C range lower-limit temperature $T_{5L}$ within the range of 15 °C to 20 °C and the 5 °C range latent heat of melting $H_5$ of 140 J/g or more.

[Heat storage system for heating and cooling building]

The heat storage system for heating and cooling a building according to the present embodiment includes a heat storage material module using the heat storage material composition according to the above-described present embodiment.

(Heat storage material module)

As the heat storage material module, for example, the above-described heat storage material composition is filled in a container having a sufficient sealing property to be a heat storage material pack, and one or a plurality of the heat storage material packs are stacked and provided with an appropriate flow path to be modularized for use. Examples of the container used for the heat storage material pack include an aluminum pack formed by thermally welding an aluminum pack sheet formed by stacking resin sheets on an aluminum sheet. The heat storage material module is installed on at least a part of a floor surface, a wall surface, or a ceiling surface, each dividing a space in a building.

The heat storage material module installed in this way stores heat (stores cold) by heat exchange between a module surface and an atmosphere ventilated on the module surface, solar radiation heat due to solar radiation, an air conditioning system utilizing nighttime electric power, and the like. For example, in the daytime, the heat storage material composition in the heat storage material module melts by heat obtained from a space in a building and retains the enthalpy for that inside the heat storage material composition. Thereafter, when the outside air temperature drops in the nighttime, the melted heat storage material composition solidifies and releases heat into the space in the building. Thus, when the heat storage material module is installed in the building, the action of melting and solidification of the heat storage material composition can reduce the energy load for heating and cooling.

(Effect)

The heat storage material system according to the present embodiment can reduce energy load for heating and cooling by storing heat (storing cold) by heat exchange between a module surface and an atmosphere ventilated on the module surface, solar radiation heat due to solar radiation, an air conditioning system utilizing nighttime electric power, and the like.

EXAMPLES

Hereinafter, the present invention is described in more detail with reference to Examples and Comparative Examples, but the present invention is not limited to these Examples.

[Example 1]

(Preparation of heat storage material composition)

Calcium chloride hexahydrate (manufactured by KISHIDA CHEMICAL Co.,Ltd., guaranteed reagent), ammonium bromide (manufactured by KISHIDA CHEMICAL Co.,Ltd., guaranteed reagent), and potassium chloride (manufactured by KISHIDA CHEMICAL Co.,Ltd., guaranteed reagent) were prepared.

Predetermined amounts of calcium chloride hexahydrate, ammonium bromide, and potassium chloride were mixed in a 20 ml glass sample bottle to make a total of about 5 g. The amounts of calcium chloride hexahydrate, ammonium bromide, and potassium chloride were combined in such a way that the composition of the resulting heat storage material composition would have a composition in Table 1. When the resulting mixture was warmed in hot water at 50 °C or higher, a heat storage material composition was obtained (sample No. A1).

The formation of precipitation during the preparation of the heat storage material composition was also investigated. The formation of precipitation during the preparation of the heat storage material composition is an indicator that the property stability of the heat storage material composition is low when repeated solidification and melting occurs. In the heat storage material composition of sample No. A1, no precipitation was formed. The result is shown in Table 1.

[Table 1]

| Example No. | Sample No. | Heat storage material composition | | | Material properties | | | | Symbols in Figures |
| | | Contents in Main agent (mass%) | | | Precipitation formation during Preparation | Total latent heat of melting (J/g) | 5 °C range latent heat of melting (J/g) | 5 °C range lower-limit temperature (°C) | |
| | | $CaCl_2 \cdot 6H_2O$ (X) | $NH_4Br$ (Y) | KCl (Z) | | | | | |
|---|---|---|---|---|---|---|---|---|---|
| Example 1 | A1 | 92.0 | 7.0 | 1.0 | No | 171.2 | 151.9 | 19.3 | ○ |
| Example 2 | A2 | 90.0 | 7.0 | 3.0 | No | 180.3 | 178.1 | 18.4 | ○ |
| Example 3 | A3 | 88.0 | 7.0 | 5.0 | No | 174.9 | 173.2 | 18.5 | ○ |
| Example 4 | A4 | 91.5 | 7.5 | 1.0 | No | 178.7 | 168.2 | 19.1 | ○ |
| Example 5 | A5 | 89.5 | 7.5 | 3.0 | No | 175.8 | 173.7 | 18.2 | ○ |
| Example 6 | A6 | 87.5 | 7.5 | 5.0 | No | 174.0 | 171.7 | 18.0 | ○ |
| Example 7 | A7 | 91.0 | 8.0 | 1.0 | No | 178.0 | 167.9 | 18.9 | ○ |
| Example 8 | A8 | 89.0 | 8.0 | 3.0 | No | 179.3 | 177.1 | 17.9 | ○ |
| Example 9 | A9 | 87.0 | 8.0 | 5.0 | No | 172.0 | 171.5 | 17.8 | ○ |
| Example 10 | A10 | 86.0 | 7.0 | 7.0 | No | 174.0 | 172.2 | 18.5 | ○ |
| Example 11 | A11 | 85.5 | 7.5 | 7.0 | No | 173.0 | 171.5 | 18.1 | ○ |
| Example 12 | A12 | 85.0 | 8.0 | 7.0 | No | 159.9 | 158.5 | 17.9 | ○ |
| Example 13 | A13 | 87.0 | 7.0 | 6.0 | No | 165.0 | 163.5 | 18.5 | ○ |

(continued)

| Example No. | Sample No. | Heat storage material composition | | | Material properties | | | | Symbols in Figures |
|---|---|---|---|---|---|---|---|---|---|
| | | Contents in Main agent (mass%) | | | Precipitation formation during Preparation | Total latent heat of melting (J/g) | 5 °C range latent heat of melting (J/g) | 5 °C range lower-limit temperature (°C) | |
| | | $CaCl_2 \cdot 6H_2O$ (X) | $NH_4Br$ (Y) | KCl (Z) | | | | | |
| Example 14 | A14 | 86.5 | 7.5 | 6.0 | No | 168.4 | 165.7 | 18.2 | ○ |
| Example 15 | A15 | 86.0 | 8.0 | 6.0 | No | 165.2 | 163.9 | 17.9 | ○ |
| Example 16 | A16 | 87.5 | 7.0 | 5.5 | No | 172.1 | 170.8 | 18.5 | ○ |
| Example 17 | A17 | 87.0 | 7.5 | 5.5 | No | 171.4 | 170.2 | 17.9 | ○ |
| Example 18 | A18 | 86.5 | 8.0 | 5.5 | No | 171.9 | 170.2 | 17.7 | ○ |
| Example 19 | A19 | 90.5 | 6.5 | 3.0 | No | 174.2 | 173.4 | 18.9 | ○ |
| Example 20 | A20 | 89.0 | 6.5 | 4.5 | No | 167.7 | 166.8 | 18.9 | ○ |
| Example 21 | A21 | 88.5 | 6.5 | 5.0 | No | 169.2 | 167.2 | 18.7 | ○ |
| Example 22 | A22 | 88.0 | 6.5 | 5.5 | No | 167.7 | 167.3 | 18.5 | ○ |
| Example 23 | A23 | 88.5 | 7.0 | 4.5 | No | 161.6 | 159.4 | 18.5 | ○ |
| Example 24 | A24 | 88.0 | 7.5 | 4.5 | No | 172..8 | 170.3 | 18.1 | ○ |
| Example 25 | A25 | 87.5 | 8.0 | 4.5 | No | 165.2 | 164.7 | 17.7 | ○ |

(Measurement of total latent heat of melting $H_T$, 5 °C range latent heat of melting $H_5$, and 5 °C range lower-limit temperature $T_{5L}$)

A sample of about 10 mg was taken from the heat storage material composition, and the total latent heat of melting $H_T$, the 5 °C range latent heat of melting $H_5$, and the 5 °C range lower-limit temperature $T_{5L}$ of the heat storage material composition were measured using a DSC3+ manufactured by METTLER TOLEDO as the DSC (differential scanning calorimeter). The total latent heat of melting $H_T$ was calculated from a peak area obtained by integrating a heat flow measured by the differential scanning calorimeter (DSC) over time. The 5 °C range latent heat of melting $H_5$ was derived as the maximum value of time integration of a heat flow measured by the differential scanning calorimeter (DSC) from a certain instant (time $t_1$, temperature $T_1$) to an instant (time $t_2$, temperature $T_1 + 5$) when the temperature reaches $T_1 + 5$ °C. The 5 °C range lower-limit temperature $T_{5L}$ was derived as the lower limit temperature at the time of calculation of the 5 °C range latent heat of melting $H_5$. These results are shown in Table 1.

[Examples 2 to 37 and Comparative Examples 1 to 13]

Heat storage material compositions were each obtained in the same manner as in Example 1 except that the amounts of calcium chloride hexahydrate, ammonium bromide, and potassium chloride were changed so that the resulting heat storage material composition had a composition in Table 1 or 2 (sample No. A2 to A50).
Note that with respect to sample No. A2 to A50, the formation of precipitation of the heat storage material composition was investigated in the same manner as in Example 1.
Among these, sample No. A41 to A46 formed precipitation of the heat storage material composition during preparation. Therefore, with respect to sample No. A41 to A46, it was not possible to measure the total latent heat of melting $H_T$, the 5 °C range latent heat of melting $H_5$, and the 5 °C range lower-limit temperature $T_{5L}$.

[Table 2]

| Example No. | Sample No. | Heat storage material composition | | | Material properties | | | | Symbols in Figures |
|---|---|---|---|---|---|---|---|---|---|
| | | Contents in Main agent (mass%) | | | Precipitation formation during Preparation | Total latent heat of melting (J/g) | 5 °C range latent heat of melting (J/g) | 5 °C range lower-limit temperature (°C) | |
| | | $CaCl_2 \cdot 6H_2O$ (X) | $NH_4Br$ (Y) | KCl (Z) | | | | | |
| Example 26 | A26 | 89.0 | 9.0 | 2.0 | No | 167.6 | 164.1 | 18.0 | ○ |
| Example 27 | A27 | 88.0 | 9.0 | 3.0 | No | 173.2 | 171.9 | 17.5 | ○ |
| Example 28 | A28 | 87.0 | 9.0 | 4.0 | No | 171.4 | 170.2 | 17.5 | ○ |
| Example 29 | A29 | 88.0 | 10.0 | 2.0 | No | 165.2 | 161.0 | 17.8 | ○ |
| Example 30 | A30 | 87.0 | 10.0 | 3.0 | No | 166.5 | 164.3 | 17.4 | ○ |
| Example 31 | A31 | 88.0 | 8.0 | 4.0 | No | 172.3 | 171.3 | 18.0 | ○ |
| Example 32 | A32 | 89.0 | 7.0 | 4.0 | No | 171.0 | 169.1 | 18.1 | ○ |
| Example 33 | A 33 | 85.0 | 9.0 | 6.0 | No | 156.8 | 156.8 | 18.8 | ○ |
| Example 34 | A 34 | 89.0 | 4.0 | 7.0 | No | 167.3 | 166.0 | 20.0 | ○ |
| Example 35 | A35 | 88.0 | 4.0 | 8.0 | No | 160.4 | 157.7 | 20.0 | ○ |
| Example 36 | A36 | 93.0 | 5.0 | 2.0 | No | 170.6 | 152.9 | 20.0 | ○ |
| Example 37 | A37 | 90.0 | 5.0 | 5.0 | No | 170.3 | 170.3 | 19.6 | ○ |
| Comparative Exampe 1 | A38 | 96.0 | 3.0 | 1.0 | No | 165.8 | 120.7 | 22.4 | × |
| Comparative Exampe 2 | A39 | 88.0 | 3.0 | 9.0 | No | 158.3 | 145.8 | 21.0 | × |
| Comparative Exampe 3 | A40 | 92.0 | 3.0 | 5.0 | No | 171.9 | 164.7 | 21.0 | × |
| Comparative Exampe 4 | A41 | 84.0 | 7.0 | 9.0 | Yes | - | - | - | × |
| Comparative Exampe 5 | A42 | 83.5 | 7.5 | 9.0 | Yes | - | - | - | × |
| Comparative Exampe 6 | A43 | 83.0 | 8.0 | 9.0 | Yes | - | - | - | × |

| Example No. | Sample No. | Heat storage material composition | | | Material properties | | | | Symbols in Figures |
|---|---|---|---|---|---|---|---|---|---|
| | | Contents in Main agent (mass%) | | | Precipitation formation during Preparation | Total latent heat of melting (J/g) | 5 °C range latent heat of melting (J/g) | 5 °C range lower-limit temperature (°C) | |
| | | $CaCl_2 \cdot 6H_2O$ (X) | $NH_4Br$ (Y) | KCl (Z) | | | | | |
| Comparative Exampe 7 | A44 | 87.0 | 11.0 | 20 | Yes | - | - | - | × |
| Comparative Exampe 8 | A45 | 86.0 | 11.0 | 3.0 | Yes | - | - | - | × |
| Comparative Exampe 9 | A46 | 85.0 | 11.0 | 4.0 | Yes | - | - | - | × |
| Comparative Exampe 10 | A47 | 100.0 | 0.0 | 0.0 | No | 196.5 | 196.5 | 26.1 | No plot |
| Comparative Exampe 11 | A48 | 93.9 | 6.3 | 0.0 | No | 182.1 | 158.3 | 20.6 | No plot |
| Comparative Exampe 12 | A49 | 91.8 | 8.2 | 0.0 | No | 180.3 | 162.0 | 20.2 | No plot |
| Comparative Exampe 13 | A50 | 95.0 | 0.0 | 5.0 | No | 165.1 | - | 28.0 | No plot |

With respect to sample No. A2 to A50, the total latent heat of melting $H_T$, the 5 °C range latent heat of melting $H_5$, and the 5 °C range lower-limit temperature $T_{5L}$ were calculated in the same manner as in Example 1. The results are shown in Tables 1 and 2.

According to Tables 1 and 2, it was found that sample No. A1 to A37 are heat storage material compositions satisfying equations (1) to (4) and having the 5 °C range lower-limit temperature $T_{5L}$ within the range of 15 °C to 20 °C and the 5 °C range latent heat of melting $H_5$ of 140 J/g or more.

As for sample No. A41 to A46, the total latent heat of melting $H_T$, the 5 °C range latent heat of melting $H_5$, the 5 °C range lower-limit temperature $T_{5L}$, and the like were not measured because precipitation of the heat storage material composition was formed during preparation. According to Tables 1 and 2, sample No. A38 to A40 and A47 to A50 were found to have the 5 °C range lower-limit temperature $T_{5L}$ exceeding 20 °C.

(Ternary composition diagram)

Fig. 3 is a ternary composition diagram illustrating a suitable range of contents of calcium chloride hexahydrate, ammonium bromide, and potassium chloride in the main agent. Fig. 4 is an enlarged view of a part of Fig. 3.

The compositions of the heat storage material compositions of sample No. A1 to A50 were plotted in Figs. 3 and 4.

Figs. 3 and 4 indicate plots of the heat storage material compositions satisfying equations (1) to (4) and having the 5 °C range lower-limit temperature $T_{5L}$ within the range of 15 °C to 20 °C and the 5 °C range latent heat of melting $H_5$ of 140 J/g or more with a symbol ○. The symbol o indicates heat storage material compositions having good properties.

Figs. 3 and 4 indicate plots of heat storage material compositions for which measurement of the 5 °C range lower-limit temperature $T_{5L}$ cannot be performed and heat storage material compositions having the 5 °C range lower-limit temperature $T_{5L}$ exceeding 20 °C with a symbol x. The symbol x indicates heat storage material compositions having poor properties.

In Figs. 3 and 4, a quadrilateral region R is a region satisfying the following equations (1) to (4).

[Equation 9]

$$X+Y+Z=100 \qquad (1)$$

[Equation 10]

$$X+0.714Y-90.857 \geq 0 \qquad (2)$$

[Equation 11]

$$X+Y-99.000 \leq 0 \qquad (3)$$

[Equation 12]

$$4 \leq Y \leq 10 \qquad (4)$$

It was found that the heat storage material compositions indicated by the symbol o in Figs. 3 and 4 satisfy all of the following conditions (a) to (c).

    (a) 85.0 to 93.0 mass% of calcium chloride hexahydrate is included in 100 mass% of the main agent.
    (b) 4.0 to 10.0 mass% of ammonium bromide is included in 100 mass% of the main agent.
    (c) 1.0 to 8.0 mass% of potassium chloride is included in 100 mass% of the main agent.

The heat storage material compositions of sample No. A1 to A37 were found to have the 5 °C range lower-limit temperature $T_{5L}$ within the range of 15 °C to 20 °C and the 5 °C range latent heat of melting $H_5$ of 140 J/g or more and to be excellent as the heat storage material composition for the heat storage system for heating and cooling a building.

The heat storage material compositions of sample No. A38 to A40 were found to be not good as the heat storage material composition for the heat storage system for heating and cooling a building because at least one of the 5 °C range lower-limit temperature $T_{5L}$ or the 5 °C range latent heat of melting $H_5$ is not preferable.

The heat storage material compositions of sample No. A41 to A46 were found to be not good as the heat storage material composition for the heat storage system for heating and cooling a building due to the formation of precipitation during the preparation.

Although the present invention has been described by way of examples, the present invention is not limited thereto, and various modifications are possible within the present invention.

INDUSTRIAL APPLICABILITY

The present invention provides a heat storage material composition having the 5 °C range lower-limit temperature $T_{5L}$ within the range of 15 °C to 20 °C and the 5 °C range latent heat of melting $H_5$ of 140 J/g or more, and a heat storage system for heating and cooling a building with the heat storage material composition.

REFERENCE SIGNS LIST

$T_{5L}$    5 °C range lower-limit temperature
$T_{5H}$    5 °C range upper-limit temperature
$H_T$    Total latent heat of melting
$H_5$    5 °C range latent heat of melting

**Claims**

1. A heat storage material composition, comprising:

   a main agent composed of calcium chloride hexahydrate, ammonium bromide, and potassium chloride, wherein when a content of calcium chloride hexahydrate is defined as X mass%, a content of ammonium bromide is defined as Y mass%, and a content of potassium chloride is defined as Z mass% in 100 mass% of the main agent, X, Y, and Z satisfy following equations (1) to (4):
   [Equation 1]

$$X+Y+Z=100 \qquad (1)$$

   [Equation 2]

$$X+0.714Y-90.857 \geq 0 \qquad (2)$$

   [Equation 3]

$$X+Y-99.000 \leq 0 \qquad (3)$$

   [Equation 4]

$$4 \leq Y \leq 10 \qquad (4)$$

2. The heat storage material composition according to claim 1, wherein 85.0 to 93.0 mass% of calcium chloride hexahydrate, 4.0 to 10.0 mass% of ammonium bromide, and 1.0 to 8.0 mass% of potassium chloride are included in 100 mass% of the main agent.

3. The heat storage material composition according to claim 1 or 2, further comprising at least one melting point depressant selected from the group consisting of sodium chloride, sodium nitrate, sodium bromide, ammonium chloride, ammonium sulfate, ammonium nitrate, ammonium phosphate, and urea.

4. The heat storage material composition of any one of claims 1 to 3, further comprising: at least one supercooling inhibitor selected from the group consisting of strontium hydroxide octahydrate, strontium hydroxide, strontium chloride, strontium chloride hexahydrate, octadecane, decanoic acid, viscose rayon, bromooctadecane, sodium monododecyl phosphate, alumina, propanol, 2-propanol, 1-propanol, dodecyl phosphate Na, borax $Na_2B_4O_5(OH)_4 \cdot 8H_2O$, calcium hydroxide, barium hydroxide, aluminum hydroxide, graphite, aluminum, titanium dioxide, hectorite, smectite clay, bentonite, laponite, propylene glycol, ethylene glycol, glycerin, ethylenediamine tetraacetic acid, sodium alkylsulfate, sodium alkylphosphate, potassium alkylsulfate, and potassium alkylphosphate.

5. The heat storage material composition according to any one of claims 1 to 4, further comprising: at least one phase separation inhibitor selected from the group consisting of sodium silicate, water glass, polyacrylic acid, polyacrylic ester, copolymer of acrylamide, acrylic acid, and DMAEA-MeCl, polyacrylic ester based resin, polyacrylamide, polyaluminum chloride, aluminum sulfate, ferric polysulfate, polycarboxylate polyether polymer, acrylic acid-maleic acid copolymer sodium salt, acrylic acid-sulfonic acid based monomer copolymer sodium salt, acrylamide-dimethylaminoethyl methacrylate dimethyl sulfate copolymer, acrylamide-sodium acrylate copolymer, polyethylene glycol, polypropylene glycol, superabsorbent polymer (SAP), carboxymethyl cellulose (CMC), a derivative of CMC, carrageenan, a derivative of carrageenan, xanthan gum, a derivative of xanthan gum, pectin, a derivative of pectin, starch, a derivative of starch, konjac, agar, layered silicate, and a compound substance of some of these substances.

6. A heat storage system for heating and cooling a building, comprising:
a heat storage material module using the heat storage material composition according to any one of claims 1 to 5.

## Patentansprüche

1. Wärmespeichermaterialzusammensetzung, umfassend:

ein Hauptmittel, zusammengesetzt aus Calciumchloridhexahydrat, Ammoniumbromid und Kaliumchlorid, wobei wenn ein Gehalt an Calciumchloridhexahydrat als X Massen-% definiert ist, ein Gehalt an Ammoniumbromid als Y Massen-% definiert ist und ein Gehalt an Kaliumchlorid als Z Massen-% definiert ist in 100 Massen-% des Hauptmittels, X, Y und Z die folgenden Gleichungen (1) bis (4) erfüllen:
[Gleichung 1]

$$X+Y+Z=100 \quad (1)$$

[Gleichung 2]

$$X+0,714Y-90,857 \geq 0 \quad (2)$$

[Gleichung 3]

$$X+Y-99,000 \leq 0 \quad (3)$$

[Gleichung 4]

$$4 \leq Y \leq 10 \quad (4)$$

2. Die Wärmespeichermaterialzusammensetzung nach Anspruch 1, wobei 85,0 bis 93,0 Massen-% Calciumchloridhexahydrat, 4,0 bis 10,0 Massen-% Ammoniumbromid und 1,0 bis 8,0 Massen-% Kaliumchlorid in 100 Massen-% des Hauptmittels beinhaltet sind.

3. Die Wärmespeichermaterialzusammensetzung nach Anspruch 1 oder 2, weiter umfassend mindestens ein schmelzpunktsenkendes Mittel, ausgewählt aus der Gruppe, bestehend aus Natriumchlorid, Natriumnitrat, Natriumbromid, Ammoniumchlorid, Ammoniumsulfat, Ammoniumnitrat, Ammoniumphosphat und Harnstoff.

4. Die Wärmespeichermaterialzusammensetzung nach irgendeinem der Ansprüche 1 bis 3, weiter umfassend: mindestens einen Unterkühlungsinhibitor, ausgewählt aus der Gruppe, bestehend aus Strontiumhydroxid-Octahydrat, Strontiumhydroxid, Strontiumchlorid, Strontiumchlorid-Hexahydrat, Octadecan, Decansäure, Viskose Rayon, Bromooctadecan, Natriummonododecylphosphat, Aluminiumoxid, Propanol, 2-Propanol, 1-Propanol, Dodecylphosphat Na, Borax $Na_2B_4O_5(OH)_4 \cdot 8H_2O$, Calciumhydroxid, Bariumhydroxid, Aluminiumhydroxid, Graphit, Aluminium, Titandioxid, Hectorit, Smektit-Ton, Bentonit, Laponit, Propylenglykol, Ethylenglykol, Glycerin, Ethylendiamintetraessigsäure, Natriumalkylsulfat, Natriumalkylphosphat, Kaliumalkylsulfat und Kaliumalkylphosphat.

5. Die Wärmespeichermaterialzusammensetzung nach irgendeinem der Ansprüche 1 bis 4, weiter umfassend: mindestens einen Phasentrennungsinhibitor, ausgewählt aus der Gruppe, bestehend aus Natriumsilikat, Wasserglas, Polyacrylsäure, Polyacrylsäureester, Copolymer aus Acrylamid, Acrylsäure und DMAEA-MeCl, Harz auf Basis von Polyacrylsäureester, Polyacrylamid, Polyaluminiumchlorid, Aluminiumsulfat, Eisen(III)-polysulfat, Polycarboxylatpolyetherpolymer, Natriumsalz von Acrylsäure-Maleinsäure-Copolymer, Natriumsalz von Monomer auf Basis von Acrylsäure-Sulfonsäure, Acrylamid-Dimethylaminoethylmethacrylat-Dimethylsulfat-Copolymer, Acrylamid-Natriumacrylat-Copolymer, Polyethylenglykol, Polypropylenglykol, superabsorbierendes Polymer (SAP), Carboxymethylcellulose (CMC), ein Derivat von CMC, Carrageenan, ein Derivat von Carrageenan, Xanthangummi, ein Derivat von Xanthangummi, Pektin, ein Derivat von Pektin, Stärke, ein Derivat von Stärke, Konjac, Agar, Schichtsilikat und einer Verbindung einiger dieser Stoffe.

6. Wärmespeichersystem zum Heizen und Kühlen eines Gebäudes, umfassend:
   ein Wärmespeichermaterialmodul, verwendend die Wärmespeichermaterialzusammensetzung nach irgendeinem der Ansprüche 1 bis 5.

## Revendications

1. Composition de matériau de stockage de chaleur, comprenant :

   un agent principal composé de chlorure de calcium hexahydraté, de bromure d'ammonium, et de chlorure de potassium, dans lequel
   lorsqu'une teneur en chlorure de calcium hexahydraté est définie comme étant de X % en masse, une teneur en bromure d'ammonium est définie comme étant de Y % en masse, et une teneur en chlorure de potassium est définie comme étant de Z % en masse dans 100 % en masse de l'agent principal, X, Y, et Z satisfont les équations (1) à (4) suivantes :
   [Equation 1]

$$X + Y + Z = 100 \qquad (1)$$

   [Equation 2]

$$X + 0{,}714Y - 90{,}857 \geq 0 \quad (2)$$

   [Equation 3]

$$X + Y - 99{,}000 \leq 0 \qquad (3)$$

   [Equation 4]

$$4 \leq Y \leq 10 \qquad (4)$$

2. Composition de matériau de stockage de chaleur selon la revendication 1, dans laquelle 85,0 à 93,0 % en masse de chlorure de calcium hexahydraté, 4,0 à 10,0 % en masse de bromure d'ammonium, et 1,0 à 8,0 % en masse de chlorure de potassium sont inclus dans 100 % en masse de l'agent principal.

3. Composition de matériau de stockage de chaleur selon la revendication 1 ou 2, comprenant en outre au moins un agent abaissant le point de fusion choisi dans le groupe constitué par le chlorure de sodium, le nitrate de sodium, le bromure de sodium, le chlorure d'ammonium, le sulfate d'ammonium, le nitrate d'ammonium, le phosphate d'ammonium, et l'urée.

4. Composition de matériau de stockage de chaleur selon l'une quelconque des revendications 1 à 3, comprenant en outre : au moins un inhibiteur de surfusion choisi dans le groupe constitué par l'hydroxyde de strontium octahydraté, l'hydroxyde de strontium, le chlorure de strontium, le chlorure de strontium hexahydraté, l'octadécane, l'acide décanoïque, la viscose rayonne, le bromooctadécane, le monododécylphosphate de sodium, l'alumine, le propanol, le 2-propanol, le 1-propanol, le dodécylphosphate Na, le borax $Na_2B_4O5(OH)_4 \cdot 8H_2O$, l'hydroxyde de calcium, l'hydroxyde de baryum, l'hydroxyde d'aluminium, le graphite, l'aluminium, le dioxyde de titane, l'hectorite, l'argile smectique, la bentonite, la laponite, le propylèneglycol, l'éthylèneglycol, la glycérine, l'acide éthylènediamine tétraacétique, un alkylsulfate de sodium, un alkylphosphate de sodium, un alkylsulfate de potassium, et un alkylphosphate de potassium.

5. Composition de matériau de stockage de chaleur selon l'une quelconque des revendications 1 à 4, comprenant en outre : au moins un inhibiteur de séparation de phase choisi dans le groupe constitué par le silicate de sodium, le verre soluble, l'acide polyacrylique, l'ester polyacrylique, un copolymère d'acrylamide, d'acide acrylique et de DMAEA-MeCI, une résine à base d'ester polyacrylique, le polyacrylamide, le chlorure de polyaluminium, le sulfate d'aluminium, le polysulfate ferrique, un polymère de polycarboxylate polyéther, un sel de sodium de copolymère d'acide acrylique-acide maléique, un sel de sodium de copolymère de monomères à base d'acide acrylique-acide sulfonique, un copolymère d'acrylamide-diéthylaminoéthylméthacrylate diméthylsulfate, un copolymère d'acrylamide-acrylate de sodium, le polyéthylèneglycol, le polypropylèneglycol, un polymère superabsorbant (SAP), la carboxyméthylcellulose (CMC), un dérivé de CMC, le carraghénane, un dérivé de carraghénane, la gomme de xanthane, un dérivé de gomme de xanthane, la pectine, un dérivé de pectine, l'amidon, un dérivé d'amidon, le konjac, l'agar-agar, le silicate en couches, et une substance composée formée de certaines de ces substances.

6. Système de stockage de chaleur pour chauffer et refroidir un bâtiment, comprenant :
un module de matériau de stockage de chaleur utilisant la composition de matériau de stockage de chaleur selon l'une quelconque des revendications 1 à 5.

FIG. 1

FIG. 2

# FIG. 3

# FIG. 4

**EP 4 067 455 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59109578 A